(19) Europäisches Patentamt / European Patent Office / Office européen des brevets

(11) **EP 1 254 943 B1**

(12) **EUROPÄISCHE PATENTSCHRIFT**

(45) Veröffentlichungstag und Bekanntmachung des Hinweises auf die Patenterteilung:
**04.07.2007  Patentblatt 2007/27**

(51) Int Cl.:
*C09K 11/77* (2006.01)          *H01J 61/44* (2006.01)

(21) Anmeldenummer: **02100411.4**

(22) Anmeldetag: **25.04.2002**

(54) **Down-Conversion-Leuchtstoff, und Gasentladungslampe mit diesem Leuchtstoff**

Downconversion phosphor and gas discharge lamp with such a phosphor

Luminophore, et lampe à décharge avec ce luminophore

(84) Benannte Vertragsstaaten:
**DE FR GB**

(30) Priorität: **27.04.2001  DE 10121097**

(43) Veröffentlichungstag der Anmeldung:
**06.11.2002  Patentblatt 2002/45**

(73) Patentinhaber:
• **Philips Intellectual Property & Standards GmbH
20099 Hamburg (DE)**
Benannte Vertragsstaaten:
**DE**
• **Koninklijke Philips Electronics N.V.
5621 BA  Eindhoven (NL)**
Benannte Vertragsstaaten:
**FR GB**

(72) Erfinder:
• **Feldmann, Claus, Dr.
c/o Philips Corporate
52066 Aachen (DE)**
• **Meijerink, Andries, Prof.Dr.
c/o Philips Corporate
52066 Aachen (DE)**
• **Oskam, Koert
c/o Philips Corporate
52066 Aachen (DE)**
• **Peijzel, Paul
c/o Philips Corporate
52066 Aachen (DE)**

(74) Vertreter: **Volmer, Georg et al
Philips Intellectual Property & Standards GmbH,
Postfach 50 04 42
52088 Aachen (DE)**

(56) Entgegenhaltungen:
**EP-A2- 1 067 166          EP-A2- 1 111 025**

• **WEGH R T ET AL: "QUANTUM CUTTING THROUGH DOWNCONVERSION IN RARE-EARTH COMPOUNDS" JOURNAL OF LUMINESCENCE, AMSTERDAM, NL, Bd. 87-89, Mai 2000 (2000-05), Seiten 1017-1019, XP001079785 ISSN: 0022-2313**
• **WEGH R T ET AL: "VISIBLE QUANTUM CUTTING VIA DOWNCONVERSION IN LIGDF4: ER3+, TB3+ UPON ER3+ F411 4F105D EXCITATION" JOURNAL OF LUMINESCENCE, AMSTERDAM, NL, Bd. 90, Nr. 3/4, August 2000 (2000-08), Seiten 111-122, XP001079788 ISSN: 0022-2313**
• **OSKAM K D ET AL: "Downconversion: a new route to visible quantum cutting" JOURNAL OF ALLOYS AND COMPOUNDS, ELSEVIER SEQUOIA, LAUSANNE, CH, Bd. 300-301, April 2000 (2000-04), Seiten 421-425, XP004192572 ISSN: 0925-8388**
• **MEIJERINK A ET AL: "VUV SPECTROSCOPY OF LANTHANIDES: EXTENDING THE HORIZON" MATERIALS SCIENCE FORUM, AEDERMANNSFDORF, CH, Bd. 315-317, Oktober 1998 (1998-10), Seiten 11-26, XP001079790 ISSN: 0255-5476**

EP 1 254 943 B1

**Beschreibung**

Die Erfindung betrifft eine Gasentladungslampe, ausgerüstet mit einem Gasentladungsgefäß, gefüllt mit einer Gasfüllung, die geeignet ist, eine Gasentladung, die VUV-Strahlung emittiert, zu unterstützen, mit einer Leuchtstoffbeschichtung, die einen Down-Conversion-Leuchtstoff enthält, und mit Mitteln zur Zündung und Aufrechterhaltung einer Gasentladung.

Konventionelle Leuchtstofflampen sind Quecksilbergasentladungslampen, deren Lichtausstrahlung auf einer Quecksilberniederdruckgasentladung basiert. Eine Quecksilberniederdruckgasentladung emittiert Strahlung überwiegend im nahen UV mit einem Maximum bei 254 nm, die durch UV-Leuchtstoffe in sichtbares Licht umgewandelt wird.

Die Quecksilbergasentladungslampe hat eine ausgereifte Technologie und ist in Bezug auf die Lampeneffizienz $\eta_{lamp}$ durch andere Lampentechnologien nur schwer zu erreichen oder gar zu übertreffen.

Das Quecksilber in der Gasfüllung wird jedoch verstärkt als umweltschädliche und giftige Substanz angesehen, die in modernen Massenprodukten aufgrund der Umwdtgefährdung bei Anwendung, Produktion und Entsorgung möglichst vermieden werden sollte. Deswegen bemüht man sich seit einiger Zeit um die Entwicklung alternativer Lampentechnologien.

Eine der quecksilberfreien bzw. quecksilberarmen Alternativen zur herkömmlichen Quecksilbergasentladungslampe ist die Xenon-Niederdruckgasentladungslampe, die eine Gasfüllung hat, die überwiegend Xenon enthält. Eine Gasentladung in einer Xenon-Niederdruckgasentladungslampe emittiert Vakuum-Ultraviolettstrahlung (VUV-Strahlung), im Gegensatz zu der UV-Strahlung der Quecksilberentladung. Die VUV-Strahlung wird von Excimeren, z. B. $Xe_2^*$ ,erzeugt und ist eine molekulare Bandenstrahlung mit einem breiten Spektrum im Bereich um 172 nm. Mit dieser Lampentechnologie werden auch schon Entladungseffizienzen $\eta_{dis}$ von 65 % erreicht.

Ein weiterer Vorteil der Xenon-Niederdruckgasentladungslampe ist die kurze Ansprechzeit der Gasentladung, die sie als Signallampe für Automobile, als Lampe für Kopier- und Faxgeräte und als Wasserdesinfektionslampe interessant macht.

Aber obwohl die Xenon-Gasentladungslampe eine Entladungseffizienz $\eta_{dis}$ erreicht, die mit der der Quecksilbergasentladungslampe vergleichbar ist, ist die Lampeneffizienz $\eta_{lamp}$ der Xenongasentladungslampe noch deutlich niedriger als die der Quecksilbergasentladungslampe.

Grundsätzlich setzt sich die Lampeneffizienz $\eta_{lamp}$ aus den Komponenten Entladungseffizienz $\eta_{dis}$, Leuchtstoffeffizienz $\eta_{phos}$, dem Anteil des erzeugten sichtbaren Lichtes, das die Lampe verlässt $\eta_{esc}$ und dem Anteil $\eta_{vuv}$ der UV-Strahlung, die vom Leuchtstoff erzeugt wird, zusammen:

$$\eta_{lamp} = \eta_{dis} \cdot \eta_{phos} \cdot \eta_{esc} \cdot \eta_{vuv}$$

Eine Handicap der herkömmlichen Xenon-Niederdruckgasentladungslampe liegt in der vom Prinzip her ineffektiven Umwandlung eines energiereichen VUV-Photons mit einer Wellenlängen von etwa 172 nm in ein vergleichsweise energiearmes Photon aus dem sichtbaren Spektrum von 400 bis 700 nm durch die Leuchtstoffbeschichtung der Lampe. Selbst wenn die Quantenausbeute des Leuchtstoffs bei 100% liegt, wird durch die Konversion eines VUV-Photons in eine sichtbares Photon durchschnittlich 65 % der Energie durch strahlenlose Übergänge verloren.

Überraschenderweise ist es jedoch bereits gelungen, VUV-Leuchtstoffe zu entwickeln, die eine Quantenausbeute von mehr als 100 % für die Umwandlung von VUV-Photonen in sichtbare Photonen erreichen. Diese Quantenausbeute wird dadurch erzielt, dass ein VUV-Quant mit einer Elektronenenergie von 7.3 eV in zwei sichtbare Quanten mit einer Elektronenenergie um 2.5 eV konvertiert wird. Derartige Leuchtstoffe für Xenon-Niederdruckgasentladungslampen sind beispielsweise aus René T. Wegh, Harry Donker, Koentraad D. Oskam, Andries Meijerink "Visible Quantum Cutting in LiGdF4: Eu3+ through Downconversion" Science 283, 663, bekannt.

EP 1111025 beschreibt Leuchtstoffe mit Zusammensetzungen, welche die Lanthanidionen-Paarungen Eu/Y/Gd und Tb/Y/Gd in Kombination mit den Elementen Ge und Si enthalten.

In Analogie zu den schon länger bekannten Multiphotonen-Leuchtstoffen, die durch "Up-Conversion" aus zwei sichtbaren langwelligen Photonen ein kurzwelliges Photon erzeugen, werden diese neuen Leuchtstoffe, die aus einem kurzwelligen Photon zwei langwellige Photonen erzeugen, als Down-Conversion-Leuchtstoffe bezeichnet.

Ein Nachteil ist es, dass bisher nur rote und violette Down-Conversion-Leuchtstoffe bekannt sind.

Es ist eine Aufgabe der vorliegsnden Erfindung, eine Gasentladungslampe, ausgerüstet mit einem Gasentladungsgefäß, gefüllt mit einer Gasfüllung die geeignet ist für eine Gasentladung die VUV-Strahlung emittiert, mit einer Leuchtstoffbeschichtung, die einen Down-Conversion-Leuchtstoff enthält, und mit Mitteln zur Zündung und Aufrechterhaltung einer Gasentladung, zur Verfügung zu stellen, deren Farbspektrum erweitert ist.

Erfindungsgemäß wird die Aufgabe gslöst durch eine Gasentladungslampe, ausgärüstet mit einem Gasentladungsgefäß, gefüllt mit einer Gasfüllung die geeignet ist, eine Gasentladung die VUV-Strahlung emittiert, zu unterstützen, mit einer Leuchtstoffbeschichtung, die einen Down-Conversion-Leuchtstoff enthält, und mit Mitteln zur Zündung und Aufrechterhaltung einer Gasentladung bei der der Down-Conversion-Leuchtstoff ein Paar von Aktivatoren aus einem ersten Lanthanoiden-Ion und einem zweiten Lanthanoiden-Ion und einen Coaktivator enthält, wobei

das erste Lanthanoiden-Ion das Gadolinium(III)-Ion und das zweite Lanthanoiden-Ion das Holmium(III)-Ion ist und das dritte lanthanoiden- Ion ausgewählt ist aus der Gruppe des Terbium(III)-Ions, des Ytterbium(III)-Ions, des Dysprosium(III)-Ions, des Europium(II)-Ions, Samarium(II)-Ions und des Mangan(II)-Ions.

Man erhält eine Gasentladungslampe der gsnannten Art, die Licht im roten oder grünen Bereich des elektromagnetischen Spektrums emittiert. Zusammen mit anderen Leuchtstoffen in der Beschichtung kann eine Gasentladungslampe der genannten Art zur Verfügung gestellt werden, deren Leuchtstoffbeschichtung ein breites weißes Farbspektrum umfasst.

Nach einer Ausführungsform der Erfindung ist das Wirtsgitter des Down-Conversion-Leuchtstoffs ein Fluorid.

Es ist besonders bevorzugt, dass das Wirtsgitter des Down-Conversion-Leuchtstoffs ein Fluorid der Zusammensetzung $M^3F_3$ mit $M^3$ = Al, In, Ga, Sc, Y, La, und den Lanthanoiden ist.

Es ist weiterhin bevorzugt, dass der Down-Conversion-Leuchtstoff das erste Lanthanoiden-Ion in einer Konzentration von 10 bis 99.98 Mol% und das zweite Lanthanoiden-Ion in einer Konzentration von 0.01 bis 30 Mol% enthält.

Es kann auch bevorzugt sein, dass der Down-Conversion-Leuchtstoff das dritte Lanthanoiden-Ion in einer Konzentration von 0.01 bis 30 Mol% , insbesondere in einer Konzentration von 0,5 Mol% enthält.

Die Erfindung betrifft auch einen Down-Conversion-Leuchtstoff, gemäß Anspruch 7. Ein derartiger Leuchtstoff kann vorteilhaft auch für Signallampen in Automobilen und Plasmabildschirme eingesetzt werden.

Nachfolgend wird die Erfindung weiter erläutert.

Eine Gasentladungslampe nach der Erfindung umfasst ein Gasentladungsgefäß mit einer Gasfüllung und mit mindestens einer Wandung die eine für sichtbare Strahlung mindestens teilweise transparente Fläche mit einer Leuchtstoffschicht aufweist. Die Leuchtstoffschicht enthält eine Leuchtstoffzubereitung mit einem Down-Conveision-Leuchtstoff aus einem anorganischen, kristallinen Wirtsgitter, der seine Leuchtfähigkeit durch eine Aktivierung durch ein Aktivatorpaar aus einem ersten und einem zweiten Lanthanoiden-Ion und einem Coaktivator aus einem dritten Lanthanoiden-Ion erworben hat. Außerdem ist die Gasentladungslampe mit einer Elektrodenstruktur zur Zündung der Gasentladung und mit weiteren Mitteln zur Zündung und Aufrechterhaltung der Gasentladung ausgerüstet.

Bevorzugt ist die Gasentladungslampe eine Xenon-Niederdruckgasentladungslampe. Es sind verschiedene Typen von Xenon-Niederdruckgasentladungslampen bekannt, die sich durch die Zündung der Gasentladung unterscheiden. Das Spektrum der Gasentladung enthält zunächst einen hohen Anteil an für das menschliche Auge unsichtbarer VUV-Strahlung die innerhalb der Beschichtung mit VUV-Leuchtstoffen auf der Innenseite des Gasentladungsgefäßes in sichtbares Licht umgewandelt und abgestrahlt wird. Im folgsnden soll unter Vakuum-Ultraviolettstrahlung elektromagnetische Strahlung mit einer maximalen Emission in einem Wellenlängenbereich zwischen 145 und 185 nm verstanden werden.

In einer typische Bauform für die Gasentladungslampe besteht diese aus einem zylindrischen, mit Xenon gefüllten Lampenkolben aus Glas, auf dessen Wandung außen ein Paar streifenförmiger Elektroden elektrisch isoliert voneinander angeordnet ist. Die streifenförmigen Elektroden erstrecken sich über die gesamte Länge des Lampenkolbens, wobei sie sich mit ihren Längsseiten unter Freilassung von zwei Spalten gegenüberliegen. Die Elektroden sind an die Pole einer Hochspannungsquelle angsschlossen, die mit einer Wechselspannung in der Größenordnung von 20 kHz bis 500 kHz derart betrieben wird, dass sich eine elektrische Entladung nur im Bereich der inneren Oberfläche des Lampenkolbens bildet.

Wenn eine Wechselstromspannung an die Elektroden angelegt wird, kann in dem xenonhaltigen Füllgas eine stille elektrische Ladung gszündet werden. Dadurch bilden sich im Xenon Excimere, d. h Moleküle, die aus einem angeregten Xenon-Atom und einem Xenon-Atom im Grundzustand bestehen.

$$Xe + X^* = Xe_2^*$$

Die Anregungsenergie wird als VUV-Strahlung mit einer Wellenlänge von $\lambda$ = 170 bis 190 nm wieder abgegeben. Diese Umwandlung von Elektronenenergie in UV-Strahlung erfolgt sehr effizient. Die erzeugten VUV-Photonen werden von den Leuchtstoffen der Leuchtstoffschicht absorbiert und die Anregungsenergie wird in dem längeiwelligen Bereich des Spektrums teilweise wieder abgegeben.

Grundsätzlich sind für das Entladungsgefäß eine Vielzahl von Bauformen wie Platten, einfache Rohre, Koaxialrohre, gerade, u-förmig, kreisförmig gebogene oder gewendelte, zylinderförmige oder anders geformte Entladungsröhren möglich.

Als Material für das Entladungsgefäßes werden Quarz oder Glassorten verwendet.

Die Elektroden bestehen aus einem Metall, z. B. Aluminium oder Silber, einer Metall-Legierung oder aus einer transparenten leitfähigen anorganischen Verbindung z. B. ITO. Sie können als Beschichtung, als aufgeklebte Folie, als Draht oder als Drahtnetz ausgebildet sein.

Das Entladungsgefäß ist mit einem Gasgemisch, das ein Edelgas wie Xenon, Krypton, Neon oder Helium enthält, gefüllt. Gasfüllungen, die überwiegend aus sauerstofffreiem Xenon von niedrigem Gasdruck, z.B. 2 Torr, bestehen, sind bevorzugt. Die Gasfüllung kann auch eine kleine Menge Quecksilber enthalten, um während der Entladung einen niedrigen Gasdruck aufrecht zu erhalten.

Die Innenwandung des Gasentladungsgefäßes ist teilweise oder ganz mit einer Leuchtstoffschicht, die ein oder auch mehrere Leuchtstoffe bzw. Leuchtstoffzubereitungen enthält, beschichtet. Weiterhin kann die Leuchtstoffschicht noch organisches oder anorganisches Bindemittel oder eine Bindemittelzusammensetzung enthalten.

Die Leuchtstoffbeschichtung ist bevorzugt auf der Innenwand des Gasentladungsgefäßes als Substrat aufgebracht und kann eine einzelne Leuchtstoffschicht oder mehrere Leuchtstoff-Schichten, insbesondere Doppelschichten aus Grund- und Deckschicht, umfassen.

Eine Leuchtstoffbeschichtung mit Grund- und Deckschicht erlaubt es, die Menge des Down-Conversion-Leuchtstoffs in der Deckschicht zu reduzieren und in der Grundschicht einen weniger kostspieligen Leuchtstoff zu verwenden. Die Grundschicht enthält bevorzugt als Leuchtstoff ein Calciumhalophosphat- Leuchtstoff, der ausgewählt ist, um den gewünschten Farbton der Lampe zu erreichen.

Die Deckschicht enthält den Down-Conversion-Leuchtstoff, der so einen wesentlichen Teil der von der Gasentladung erzeugten VUV-Strahlung direkt in die gewünschte Strahlung im sichtbaren Bereich umzuwandeln.

Der Leuchtstoff ist ein Leuchtstoff mit Aktivatoren in einem Wirtsgitter. Ein wesentliches Merkmal des erfindungsgemäßen Leuchtstoffes ist es, dass er ein Paar von Aktivatoren aus einem ersten und einem zweiten Lanthanoiden-Ion und einen Coaktivator in einem Wirtsgitter enthält.

Das erste Lanthanoiden-Ion des Aktivatorpaars ist das Gadolinium(III)-Ion, das zweite Lanthanoiden-Ion des Aktivatorpaars ist das Holmium(III)-Ion. Der Coaktivator ist ausgewählt aus der Gruppe der dreiwertigen Ionen des Terbiums, Ytterbiums, Dysprosiums, Europiums und Samariums und des zweiwertigen Ions des Mangans. Das Paar von Aktivatoren aus einem ersten Lanthanoid-Ion und einem zweiten Lanthanoiden-Ion und das Coaktivator-Ion wirkt zusammen bei der sequentiellen Emission von Photonen, mit der der Leuchtstoff mehr als ein sichtbares Photon aus einem VUV-Photon erzeugt.

Der Anregungsmechanismus kann erfolgen durch eine $^8S$-$^6G$ - Anregung des Gadolium(III)-Ions, der ein Cross-relaxation-Übergang zwischen dem Gd (III)-Ion und dem Holmium(III)-Ion folgt. Durch den Cross-Relaxation-Übergang geht das Gadolinium(III)-ion vom $^6G$-Zustand in den $^6P$-Zustand über, die freiwerdende Energie hebt das Holmium(III)-Ion vom $^5I_8$-Zustand in den $^5F_5$-Zustand über. Anschließend emittiert Holmium(III)-Ion ein sichtbares Photon, dessen Energie dem Übergang von $^5F_5$ nach $^5I_8$ entspricht.

Nach einem Energietransfer vom $^6P$-Zustand des Gadolinium(III)-Ions auf den Coaktivator emittiert dieser ebenfalls ein sichtbares Photon.

Das Wirtsgitter des Down-Conversion-Leuchtstoffs kann aus einem anorganischen Material wie Fluoride, Oxide, Halogenide, Aluminate, Gallate, Phosphate, Borate oder Silikate bestehen, das mit einigen Prozenten der beiden Aktivatoren dotiert ist. Dabei können die Aktivatoren Auf Gitterplätzen oder auf Zwischengitterplätzen des Wirtsgitters angeordnet sein.

Bevorzugt sind Fluoride als Wirtsgitter, wie z. B. Fluoride der Zusammensetzung $M^1F$ mit $M_1$ = Li, Na, K, Rb, Cs oder Fluoride der Zusammensetzung $M^2F_2$ mit $M^2$ = Mg, Ca, Sr, Ba oder Fluoride der Zusammensetzung $M^3F_3$ mit $M^3$ = B, Al, In, Ga, Sc, Y, La, und den Lanthanoiden. Besonders bevorzugt ist $GaF_3$, in dem das erste Lanthanoiden-Aktivatorion $Ga^{3+}$ Bestandteil des Wirtsgitters ist.

Weiterhin sind als Wirtsgitter ternäre gadoliniumhaltige Fluoride der Zusammensetzung $M^1GdF_4$, $M^1_2GdF_5$, $M^1_3GdF_6$, $M^1Gd_2F_7$, $M^1Gd_3F_{10}$, $M^1_5Gd_9F_{32}$, mit $M_1$ = Li, Na, K, Rb, Cs oder $M^2GdF_5$, $M^2_2GdF_7$, $M^2_3GdF_9$, $M^2Gd_2F_8$, $M^2Gd_3F_{11}$, $M^2Gd_4F_{14}$, $M^2_{13}Gd_6F_{43}$ mit $M^2$ = Mg, Ca, Sr, Ba, Mn, Zn, in denen ebenfalls Gadolinium Bestandteil des Wirtsgitters ist, bevorzugt.

Ebenso sind als Wirtsgitter Fluoride der Zusammensetzung $M^1M^3F_4$, $M^1_2M^3F_5$, $M^1_3M^3F_6$, $M^1M^3_2F_7$, $M^1M^3_3F_{10}$, $M^1_5M^3_9F_{32}$ mit $M^1$ = Li, Na, K, Rb, Cs und mit $M^3$ = B, Al, In, Ga, Sc, Y, La, und den Lanthanoiden, $M^2M^3F_5$, $M^2_2M^3F_7$, $M^2_3M^3F_9$, $M^2M^3_2F_8$, $M^2M^3_3F_{11}$, $M^2M^3_4F_{14}$, $M^2_{13}M^3_6F_{43}$ mit $M^2$ = Mg, Ca, Sr, Ba, Mn, Zn und $M^3$ = B, Al, In, Ga, Sc, Y, La, und den Lanthanoiden; $M^3M^4F_7$, $M^3_2M^4F_{10}$, $M^3_3M^4F_{13}$, $M^3M^4_2F_{11}$, $M^3M^4_3F_{15}$, $M^3M^4_4F_{19}$ mit $M^3$ = B, Al, In, Ga, Sc, Y, La, und den Lanthanoiden und $M^4$ = Ti, Zr, Si, Ge, Sn, Pb, bevorzugt.

Besonders bevorzugte Wirtsgitter sind Fluoride, deren Wirtsgitter auf dem Calciumfluorit-Kristallgittertyp basiert. In diesen Gittern haben die Kationen eine 8fache Koordination. Ebenfalls besonders bevorzugt sind Fluoride deren Gitter sich von $YF_3$ -Kristallgittertyp herleitet, in dem die Kationen eine 9fache Koordination haben. Durch die hohen Koordinationszahlen und die unpolaren Liganden zeichnen sich diese Wirtsgitter durch ein niedriges Ligandenfeld für Kationen, die Bestandteil des Wirtsgitters sind, aus.

Die mit dem Aktivatorpaar dotierten Leuchtstoffe enthalten bevorzugt 10. bis 99,8 Mol-% des dreiwertigen Gadoliniums und 0.01 bis 30 Mol-% des dreiwertigen Holmiums.

Der Down-Conversion-Leuchtstoff kann leicht mit den dreiwertigen Coaktivatoren Terbium, Ytterbium, Dysprosium, Europium, Samarium oder Mangan dotiert werden, wenn man bei der Herstellung der Leuchtstoffe den Ausgangsverbindungen ein Fluorid ausgewählt aus der Gruppe $TbF_3$, $YbF_3$, $DyF_3$, $EuF_3$, $SmF_e$ oder $MnF_2$ zufügt.

Der Absorptionskoeffizient der genannten Leuchtstoffe ist für die Wellenlängsn im Bereich der Xenonstrahlung besonders groß und die Quantenausbeute hoch. Das Wirtsgitter beteiligt sich nicht an dem Lumineszenzprozess, es beeinflusst aber die genaue Lage der Energieniveaus der Aktivatorionen, und infolgedessen die Wellenlängen von Absorption und Emission. Das Aktivatorenpaar $Gd^{3+}$-$Ho^{3+}$zeigt in den verschiedenen Wirtsgittern meist eine starke Absorptionsbande im Vakuum-UV bei 273 nm. Die Emissionsbanden liegen im Bereich vom langen Ultraviolett bis zum Gelborange, jedoch überwiegend im roten und grünen Bereich des elektromagnetischen Spektrums Die Löschtemperatur dieser Leuchtstoffe liegt bei über 100°C.

Die Korngröße der Leuchtstoffpartikel ist nicht kritisch. Üblicherweise werden die Leuchtstoffe als feinkörnige Pulver mit einer Korngrößenverteilung zwischen 1 und 20 $\mu$m verwendet.

Als Herstellungsverfahren für Leuchtstoffschicht auf einer Wandung des Entladungsgefäßes kommen sowohl Trockenbeschichtungsverfahren, wie z. B. elektrostatische Abscheidung oder elektrostatisch unterstütztes Bestäuben, als auch ein Nassbeschichtungsverfahren wie z. B. Tauchen oder Sprühen in Betracht.

Für Nassbeschichtungsverfahren muss die Leuchtstoffzubereitung in Wasser, einem organischen Lösemittel, gsgsbenenfalls zusammen mit einem Dispergiermittel, einem Tensid und einem Antischaummittel, oder einer Bindemittelzubereitung dispergiert werden. Geeignet für Bindemittelzubereitungen für eine Gasentladungslampe nach der Erfindung sind organische oder anorganische Bindemittel, die einer Betriebstemperatur von 250°C ohne Zersetzung, Versprödung oder Verfärbung überstehen.

Beispielsweise kann die Leuchtstoffzubereitung auf eine Wandung des Entladungsgefäßes mittels eines Flow-Coating-Verfahrens aufgebracht werden. Die Beschichtungssuspensionen für das Flow-Coating-Verfahren enthalten Wasser oder eine organischen Verbindung wie Butylacetat als Lösungsmittel. Die Suspension wird durch Zugabe von Hilfsmitteln, wie Stabilisatoren, Verflüssigern Cellulosederivaten, stabilisiert und in ihren rheologischen Eigenschaften beeinflusst. Die Leuchtstoffsuspension wird als dünne Schicht auf die Gefäßwände aufgsbracht, getrocknet undbei 600°C eingsbrannt.

Es kann auch bevorzugt sein, dass die Leuchtstoffzubereitung für die Leuchtstoffschicht elektrostatisch auf der Innenseite des Entladungsgefäßes abgeschieden wird.

Für eine Gasentladungslampe, die weißes Licht abstrahlen soll, werden bevorzugt ein blauemittierender Leuchtstoff aus der Gruppe $BaMgAl_{10}O_{17}$:$Eu^{2+}$; $Sr_3(PO_4)Cl$:$Eu^{2+}$ mit einem rot-grün-emittierenden Leuchtstoff nach der Erfindung kombiniert.

Die Leuchtstoffschicht hat üblicherweise eine Schichtdicke von 5 bis 100 $\mu$m.

Das Gefäß wird dann evakuiert, um alle gasförmigen Verunreinigungen, insbesondere Sauerstoff zu entfernen. Anschließend wird das Gefäß mit Xenon gefüllt und verschlossen.

Ausführungsbeispiel 1

Ein zylindrisches Entladungsgefäß aus Glas mit eine Länge von 590 mm, einem Durchmesser von 24 mm und einer Wandstärke von 0,8 mm wird mit Xenon bei einem Druck von 200 hPa gsfüllt. Das Entladungsgefäß enthält eine achsparallele Innenelektrode in Form eines Edelmetallstabs mit 2,2 mm Durchmesser. Auf der Außenfläche des Entladungsgsfäßes befindet sich die Außenelektrode aus zwei 2 mm breiten Streifen aus Leitsilber, die achsparallel angeordnet und mit der Spannungsversorgung leitend verbunden sind Die Lampe wird mit gepulster Gleichspannung betrieben.

Die Innenwand des Entladungsgefäßes ist mit einer Leuchtstoffschicht beschichtet. Die Leuchtstoffschicht enthält ein Dreibandenleuchtstoffgemisch mit folgenden Komponenten: $BaMgAl_{10}O_{17}$:$Eu^{2+}$ als blaue Komponente und $GdF_3$:Ho,Tb als grün-rote Komponente.

Zur Herstellung des $GdF_3$:Ho,Tb mit 1,0 Mol% Holmium und 0,5 Mol% Terbium werden 29.55 g $GdF_3$, 0.31g $HoF_3$ und 0.15 g $TbF_3$ gründlich gemischt und in einem Achatmörser gemahlen. Die Mischung wird in einem Korundtiegel in einem Quarzrohr unter Atmosphäre aus Argon mit einem Druck von 8 hPafür 2 h bei 300°C vorgäbrannt. Während des Brennen wurde das Quarzrohr 3mal mit Argon gsspült und wieder auf 8 hPa evakuiert. Anschließend wurde die Ofentemperatur mit einer Geschwindigkeit von 5,5 °C/min auf 650°C erhöht und die Mischung 8h bei 650 °C gesintert. Das gesinterte Pulver wird erneut gemahlen und auf eine Korngröße < 40 $\mu$m gesiebt. Die Kristallstruktur der gebildeten Phase wurde röntgendiffraktometrisch überprüft.

Mit dieser Lampe wurde eine Lichtausbeute von anfangs 37 lm/W erzielt. Nach 1000 Betriebsstunden lag die Lichtausbeute bei 34 lm/W. Die Quantenausbeute für VUV-Licht liegt bei 70%.

Ausführungsbeispiel 2

Ein zylindrisches Entladungsgefäß aus Glas mit eine Länge von 590 mm, einem Durchmesser von 24 mm und einer Wandstärke von 0,8 mm wird mit Xenon bei einem Druck von 200 hPa gefüllt. Das Entladungsgefäß enthält eine achsparallele Innenelektrode in Form eines Edelmetallstabs mit 2,2 mm Durchmesser. Auf der Außenfläche des Entladungsgefäßes befindet sich die Außenelektrode aus zwei 2 mm breiten Streifen aus Leitsilber, die achsparallel angeordnet und mit der Spannungsversorgung leitend verbunden sind. Die Lampe wird mit gepulster Gleichspannung betrieben.

Die Innenwand des Entladungsgefäßes ist mit einer Leuchtstoffschicht beschichtet.

Die Leuchtstoffschicht enthält ein Dreibandenleuchtstoffgemisch mit folgenden Komponenten: $BaMgAl_{10}O_{17}$:$Eu^{2+}$ als blaue Komponente und $LiGdF_4$:Ho,Tb als grün-rote Komponente.

Zur Herstellung des $LiGdF_4$:Ho,Tb mit 1,0 Mol% Holmium und 0,5 Mol% Terbium werden 29.55 gGdF$_3$, 3,64 g LiF, 0.31g HoF$_3$ und 0.15 g TbF$_3$ gründlich gemischt und in einem Achatmörser gemahlen. Die Mischung wird in einem Korundtiegel in einem Quarzrohr unter Atmosphäre aus Argon mit einem Druck von 8 hPa für 2 h bei 300°C vorgebrannt. Während des Brennens wurde das Quarzrohr 3mal mit Argon gespült und wieder auf 8 hPa evakuiert. Anschließend wurde die Ofentemperatur mit einer Geschwindigkeit von 5,5 °C/min auf 650°C erhöht und die Mischung 8h bei 650 °C gesintert. Das gesinterte Pulver wird erneut gämahlen und auf eine Korngröße < 40 $\mu$m gesiebt. Die Kristallstruktur der gebildeten Phase wurde röntgendiffraktometrisch überprüft.

Damit wurde eine Lichtausbeute von anfangs 37 lm/W erzielt. Nach 1000 Betriebsstunden lag die Lichtausbeute bei 34 lm/W. Die Quantenausbeute für VUV-Licht liegt bei 70%.

## Patentansprüche

1. Gasentladungslampe, ausgerüstet mit einem Gasentladungsgefäß, gefüllt mit einer Gasfüllung, die geeignet ist für eine Gasentladung, die VUV-Strahlung emittiert, mit einer Leuchtstoffbeschichtung, die einen Down-Conversion-Leuchtstoff enthält, und mit Mitteln zur Zündung und Aufrechterhaltung einer Gasentladung, bei der der Down-Conversion-Leuchtstoff in einem Wirtsgitter ein Paar von Aktivatoren aus einem ersten Lanthanoiden-Ion und einem zweiten Lanthanoiden-Ion und einen Coaktivator aus einem dritten Lantlaanoiden-Ion enthält, wobei das erste Lanthanoiden-Ion das Gadolinium(III)-Ion und das zweite Lanthanoiden-Ion das Holmium (III)-Ion ist und das dritte Lanthanoiden- Ion ausgewählt ist aus der Gruppe des Terbium(III)-Ions, des Ytterbium(III)-Ions, des Dysprosium(III)-Ions, des Europium(II)-Ions, Samarium(II)-Ions und des Mangan(II)-Ions.

2. Gasentladungslampe gemäß Anspruch 1, **dadurch gekennzeichnet,** **dass** das Wirtsgitter des Down-Conversion-Leuchtstoffs ein Fluorid ist.

3. Gasentladungslampe gemäß Anspruch 1, **dadurch gekennzeichnet,** **dass** das Wirtsgitter des Down-Conversion-Leuchtstoffs ein Fluorid der Zusammensetzung M$^3$F$_3$ mit M$^3$ = Al, In, Ga, Sc, Y, La, und den Lanthanoiden ist.

4. Gasentladungslampe gemäß Anspruch 1, **dadurch gekennzeichnet,** **dass** der Down-Conversion-Leuchtstoff das erste Lanthanoiden-Ion in einer Konzentration von 10 bis 99.98 Mol % und das zweite Lanthanoiden-Ion in einer Konzentration von 0.01 bis 30 Mol% enthält.

5. Gasentladungslampe gemäß Anspruch 1, **dadurch gekennzeichnet,** **dass** der Down-Conversion-Leuchtstoff das dritte Lanthanoiden-Ion in einer Konzentration von 0.01 bis 30 Mol% enthält.

6. Gasentladungslampe gemäß Anspruch 1, **dadurch gekennzeichnet,** **dass** der Down-Conversion-Leuchtstoff das dritte Lanthanoiden-Ion in einer Konzentration von 0.5 Mol% enthält.

7. Down-Conversion-Leuchtstoff, der in einem Wirtsgitter ein Paar von Aktivatoren aus einem ersten Lanthanoiden-Ion und einem zweiten Lanthanoiden-Ion und einen Coaktivator aus einem dritten Lanthanoiden-Ion enthält, wobei das erste Lanthanoiden-Ion das Gadolinium(III)-Ion und das zweite Lanthanoiden-Ion das Holmium(III)-Ion ist und das dritte Lanthanoiden- Ion ausgewählt ist aus der Gruppe des Terbium (III)-Ions, des Ytterbimn(III)-Ions, des Dysprosium(III)-Ions, des Europium(II)-Ions, Samarium (II)-Ions und des Mangan(II)-Ions.

## Claims

1. A gas discharge lamp fitted with a gas discharge vessel filled with a gas filling suitable for a gas discharge which emits VUV radiation, with a luminophore coating containing a down conversion luminophore, and with means for igniting and maintaining a gas discharge, in which the down conversion luminophore contains, in a host lattice, a pair of activators of a first lanthanoid ion and a second lanthanoid ion and a co-activator of a third lanthanoid ion, the first lanthanoid ion being the gadolinium (III) ion and the second lanthanoid ion being the holmium (III) ion, and the third lanthanoid ion being selected from the group of the terbium (III) ion, ytterbium (III) ion, dysprosium (III) ion, europium (II) ion, samarium (II) ion and manganese (II) ion.

2. A gas discharge lamp as claimed in claim 1, **characterized in that** the host lattice of the down conversion luminophore is a fluoride.

3. A gas discharge lamp as claimed in claim 1, **characterized in that** the host lattice of the down conversion luminophore is a fluoride of the composition M$^3$F$_3$, with M$^3$ = Al, In, Ga, Sc, Y, La and the lanthanoids.

4. A gas discharge lamp as claimed in claim 1, **characterized in that** the down conversion luminophore contains the first lanthanoid ion in a concentration of 10 to 99.98 mol% and the second lanthanoid ion in a concentration of 0.01 to 30 mol%.

**5.** A gas discharge lamp as claimed in claim 1, **characterized in that** the down conversion luminophore contains the third lanthanoid ion in a concentration of 0.01 to 30 mol%.

**6.** A gas discharge lamp as claimed in claim 1, **characterized in that** the down conversion luminophore contains the third lanthanoid ion in a concentration of 0.5 mol%.

**7.** A down conversion luminophore which, in a host lattice, has a pair of activators of a first lanthanoid ion and a second lanthanoid ion and a co-activator of a third lanthanoid ion, the first lanthanoid ion being the gadolinium (III) ion and the second lanthanoid ion being the holmium (III) ion, and the third lanthanoid ion being selected from the group of the terbium (III) ion, ytterbium (III) ion, dysprosium (III) ion, europium (II) ion, samarium (II) ion and manganese (II) ion.

**Revendications**

**1.** Lampe à décharge de gaz équipée d'une chambre à décharge de gaz remplie d'une charge de gaz qui convient pour une décharge de gaz émettant un rayonnement VUV, avec un revêtement de substance phosphorescente qui contient une substance phosphorescente à abaissement de fréquence et des moyens pour l'allumage et le maintien d'une décharge de gaz, dans laquelle la substance phosphorescente à abaissement de fréquence contient dans une grille hôte une paire d'activateurs à partir d'un premier ion de lanthanide et d'un deuxième ion de lanthanide et un coactivateur d'un troisième ion de lanthanide, le premier ion de lanthanide étant l'ion de gadolinium (III) et le deuxième ion de lanthanide étant l'ion d'holmium (III) et le troisième ion de lanthanide étant sélectionné dans le groupe de l'ion terbium (III), de l'ion ytterbium (III), de l'ion dysprosium (III), de l'ion europium (II), de l'ion samarium (II) et de l'ion manganèse (II).

**2.** Lampe à décharge de gaz selon la revendication 1, **caractérisée en ce que** la grille hôte de la substance phosphorescente à abaissement de fréquence est un fluorure.

**3.** Lampe à décharge de gaz selon la revendication 1, **caractérisée en ce que** la grille hôte de la substance phosphorescente à abaissement de fréquence est un fluorure de composition $M^3F_3$.avec $M^3$ = Al, In, Ga, Sc, Y, La et les lanthanides.

**4.** Lampe à décharge de gaz selon la revendication 1, **caractérisée en ce que** la substance phosphorescente à abaissement de fréquence contient le premier ion de lanthanide dans une concentration de 10 à 99,98 % en mole et le deuxième ion de lanthanide dans une concentration de 0,01 à 30 % en mole.

**5.** Lampe à décharge de gaz selon la revendication 1, **caractérisée en ce que** la substance phosphorescente à abaissement de fréquence contient le troisième ion de lanthanide dans une concentration de 0,01 à 30 % en mole.

**6.** Lampe à décharge de gaz selon la revendication 1, **caractérisée en ce que** la substance phosphorescente à abaissement de fréquence contient le troisième ion de lanthanide dans une concentration de 0,5 % en mole.

**7.** Substance phosphorescente à abaissement de fréquence qui contient dans une grille hôte une paire d'activateurs à partir d'un premier ion de lanthanide et d'un deuxième ion de lanthanide et un coactivateur d'un troisième ion de lanthanide, le premier ion de lanthanide étant l'ion de gadolinium (III) et le deuxième ion de lanthanide étant l'ion d'holmium (III) et le troisième ion de lanthanide étant sélectionné dans le groupe de l'ion terbium (III), de l'ion ytterbium (III), de l'ion dysprosium (III), de l'ion europium (II), de l'ion samarium (II) et de l'ion manganèse (II).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1111025 A

**In der Beschreibung aufgeführte Nicht-Patentliteratur**

- **RENÉ T. WEGH ; HARRY DONKER ; KOEN-TRAAD D. OSKAM ; ANDRIES MEIJERINK.** Visible Quantum Cutting in LiGdF4:Eu3+ through Downconversion. *Science,* vol. 283, 663